# EUROPEAN PATENT SPECIFICATION

(11) **EP 2 213 950 B1**
(45) Date of publication and mention of the grant of the patent: **25.05.2016**
(21) Application number: 10150402.5
(22) Date of filing: 11.01.2010
(51) Int. Cl.: F24D 3/18, F24D 11/02, F24D 19/10, F25B 9/00, F25B 40/00

(54) **Liquid circulation heating system and method of controlling the same**
Flüssigkeitsumlaufheizung und Steuerungsverfahren dafür
Système de chauffage de circulation liquide et son procédé de contrôle

(30) Priority: 30.01.2009 JP 2009019233
(43) Date of publication of application: 04.08.2010
(73) Proprietor: Panasonic Corporation, Kadoma-shi Osaka 571-8501 (JP)
(72) Inventor: Nakatani, Kazuo, Osaka 540-6207 (JP); Isayama, Yasuhiko, Osaka 540-6207 (JP)
(74) Representative: Eisenführ Speiser

(56) References cited:
- EP-A1- 1 162 419
- WO-A1-2008/117408
- DE-U1-202005 013 499

## Description

The present invention relates to a liquid circulation heating system for performing air-heating using a liquid and to a method of controlling the system.

Conventionally, there has been known a liquid circulation heating system for producing hot water by a boiler or an electric heater and performing air-heating using the hot water produced. In recent years, the use of a heat pump capable of producing hot water with high efficiency has been considered as an alternative heat source to a boiler and an electric heater. For example, JP 200S-39306Aproposes a liquid circulation heating system for producing hot water by a heat pump and storing the produced hot water in a hot water storage tank. In this liquid circulation heating system, the hot water stored in the hot water storage tank is fed to, for example, a heating radiator placed indoors to radiate its heat, and then returned to the hot water storage tank.

The heat pump has a heat pump circuit for circulating a refrigerant. The heat pump circuit includes, for example, a compressor, a radiator, an expansion valve, and an evaporator, which are connected by pipes. Heat is exchanged between a refrigerant and water in the radiator so as to heat the water, and thereby hot water is produced.

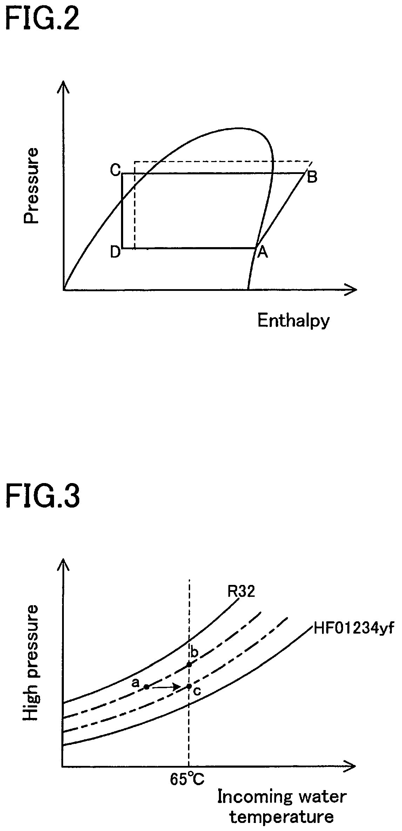

In the liquid circulation heating system, when the flow rate of the hot water fed to the heating radiator is high, the temperature of the water that flows from the heating radiator presumably does not drop so much. In this case, the temperature of the water supplied to the radiator of the heat pump rises. When the temperature of the water supplied to the radiator rises, the high pressure of the refrigeration cycle increases, as shown by a dotted line in FIG. 2.

When the high pressure of the refrigeration cycle increases, however, the increased pressure may exceed the upper limit pressure for ensuring the normal operation of the components of the heat pump.

Another liquid circulation heating system is described in EP 1 162 419 A1 which keeps the system near a predetermined working point/ within a working range by controlling an opening degree of an expansion valve providing an amount of refrigerant to the refrigerant cycle. The control operation is performed in dependence of the temperature difference between the incoming water temperature and the outgoing refrigerant temperature. In order to prevent the control mechanism to open the expansion valve for small temperature differences at higher temperatures for the incoming water, an upper limit is defined for the opening degree of the expansion valve to maintain the pressure within the refrigerant cycle.

In view of the above circumstances, it is an object of the present invention to provide a liquid circulation heating system capable of suppressing an increase in the high pressure of the refrigeration cycle when the temperature of the liquid supplied to the refrigerant radiator rises.

When the temperature of the liquid supplied to the refrigerant radiator rises, a high boiling point refrigerant causes a smaller increase in the high pressure of the refrigeration cycle than a low boiling point refrigerant does. Moreover, when a mixture of these high and low boiling point refrigerants is used, how much the high pressure of the refrigeration cycle increases as the temperature of the liquid supplied to the refrigerant radiator rises is determined by the mixture ratio 5 between these refrigerants.

Examples for such mixed refrigerants can be found inter alia in patent applications WO 2008/117408 A1, US6327866B1, US5848537 as well as FR2755753.

Accordingly, the inventors of the present invention have considered that the increase in the high pressure of the refrigeration cycle can be suppressed by actively taking advantage of the phenomenon that when a zeotropic refrigerant mixture of refrigerants having different boiling points is used as a refrigerant, the composition of the refrigerant circulating through the heat pump circuit changes. The present invention has been made in view of the above circumstances.

The present invention provides a liquid circulation heating system for performing air-heating by heating a liquid to produce a heated liquid and releasing heat of the heated liquid from a heating radiator as claimed in claim 1. This system includes a heat pump circuit for circulating a refrigerant, and this heat pump circuit includes a refrigerant radiator for heating the liquid by radiating heat from the refrigerant to produce the heated liquid. The heat pump circuit is charged with a zeotropic refrigerant mixture of at least two refrigerants having different boiling points, as the refrigerant. The system is configured so that a composition ratio of a higher boiling point refrigerant in the refrigerant circulating through the heat pump circuit increases when the liquid supplied to the refrigerant radiator has a relatively high temperature.

The present invention also provides a method of controlling a liquid circulation heating system for performing air-heating by heating a liquid to produce a heated liquid and releasing heat of the heated liquid from a heating radiator as claimed in claim 10. The liquid circulation heating system includes a heat pump circuit for circulating a refrigerant, and the heat pump circuit includes: a refrigerant radiator for heating the liquid by radiating heat from the refrigerant to produce the heated liquid; a compressor for compressing the refrigerant; a decompressor for decompressing the refrigerant; an evaporator for evaporating the refrigerant; and a vapor-liquid separator for separating the refrigerant into a gas refrigerant and a liquid refrigerant. The heat pump circuit is charged with a zeotropic refrigerant mixture of at least two refrigerants having different boiling points, as the refrigerant. This method includes the step of controlling an operation of the decompressor to reduce an amount of the liquid refrigerant in the vapor-liquid separator when the liquid supplied to the refrigerant radiator has a relatively high temperature.

The present invention makes it possible to suppress the increase in the high pressure of the refrigeration cycle when the temperature of the liquid supplied to the refrigerant radiator rises.
FIG. 1 is a schematic configuration diagram of a liquid circulation heating system according to a first embodiment of the present invention.
FIG. 2 is a Mollier diagram of a heat pump.
FIG. 3 is a diagram for explaining the fact that an increase in the high pressure of the refrigeration cycle is suppressed due to a change in the composition of the refrigerant circulating through the heat pump circuit.
FIG. 4 is a schematic configuration diagram of a liquid circulation heating system according to a second embodiment of the present invention.
FIG. 5 is a schematic configuration diagram of a liquid circulation heating system according to a third embodiment of the present invention.
FIG. 6 is a schematic configuration diagram of a heat pump of a first modification.
FIG. 7 is a schematic configuration diagram of a heat pump of a second modification.

Hereinafter, embodiments of the present invention will be described with reference to the accompanying drawings. It should be noted, however, that the embodiments described below are merely examples of the present invention, and should not be construed to limit the scope of the present invention.

### (First Embodiment)

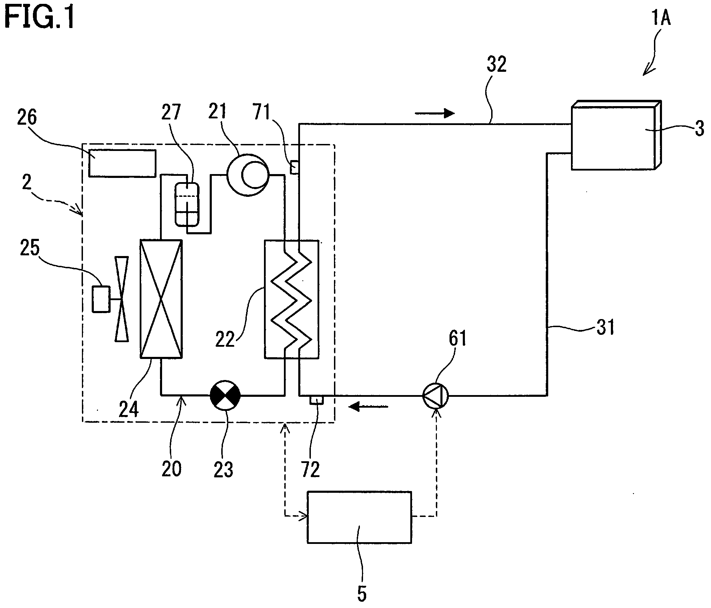

FIG. 1 shows a liquid circulation heating system 1A according to a first embodiment of the present invention. This liquid circulation heating system 1A heats a liquid to produce a heated liquid, releases heat of the heated liquid from a heating radiator 3, and thereby performs air-heating, for example, in a room. Specifically, the liquid circulation heating system 1A includes the heating radiator 3, a heat pump 2 for producing the heated liquid, and an overall controller 5 for controlling the entire system.

In the present embodiment, the heating radiator 3 is connected directly to the heat pump 2 by a supply pipe 31 and a recovery pipe 32 to be described later, so that the liquid flows without stopping. In the liquid circulation heating system 1A having such a configuration, the hot water produced can be used directly for air-heating. Therefore, heat radiation loss is reduced, and as a result, energy conservation can be achieved. As the liquid, for example, an antifreeze liquid containing propylene glycol or the like dissolved in water can be used, but water is preferably used because it is available at low cost and in large quantities. The following description will be made on the assumption that the liquid is water and the heated liquid is hot water.

The heat pump 2 has a heat pump circuit 20 for circulating a refrigerant. This heat pump circuit 20 includes a compressor 21 for compressing the refrigerant, a radiator (refrigerant radiator) 22 for radiating heat from the compressed refrigerant, an expansion valve 23 serving as a decompressor for decompressing the refrigerant that has radiated heat, and an evaporator 24 for evaporating the decompressed refrigerant. These components 21 to 24 are connected in series by pipes. The heat pump 2 includes a heat pump controller (corresponding to a controller of the present invention) 26 for controlling the compressor 21 and the expansion valve 23 according to an instruction from the overall controller 5.

In the radiator 22, heat is exchanged between the refrigerant and the water flowing through the radiator 22 so as to heat the water, and thereby hot water is produced. In the evaporator 24, heat is exchanged between the refrigerant and air blown by a fan 25, and thereby the refrigerant absorbs heat.

In the present embodiment, the heat pump circuit 20 is charged with, as a refrigerant, a zeotropic refrigerant mixture of at least two refrigerants having different boiling points. A zeotropic refrigerant mixture means a refrigerant in which the mixture composition of a gas refrigerant is different from that of a liquid refrigerant in a vapor-liquid equilibrium state (i.e., the mixture ratio between the at least two refrigerants in the gas refrigerant is different from that in the liquid refrigerant). When a comparison is made between the gas refrigerant and the liquid refrigerant, the gas refrigerant contains a higher percentage of a low boiling point refrigerant, while the liquid refrigerant contains a higher percentage of a high boiling point refrigerant. Examples of such a mixed refrigerant include R407C that is a mixture of R32, R125, and R134a, a mixture of R32 and HFO-1234yf (2,3,3,3-tetrafluoropropene), and a mixture of R32, HFO-1234yf, and R125.

It is preferable to use a zeotropic refrigerant mixture including a high boiling point refrigerant and a low boiling point refrigerant, with a difference in boiling point therebetween being 20°C or more. For example, in the case of R407C containing a high boiling point refrigerant consisting of R32 (having a boiling point of -52°C) and R125 (having a boiling point of -49°C) and a low boiling point refrigerant that is R134a (having a boiling point of -26°C), a difference in boiling point between these high and low boiling point refrigerants is 23°C.

Further, in the present embodiment, an accumulator 27 is provided between the evaporator 24 and the compressor 21. This accumulator 27 separates the refrigerant evaporated in the evaporator 24 into a gas refrigerant and a liquid refrigerant, and serves as the vapor-liquid separator of the present invention. In the present embodiment, a zeotropic refrigerant mixture is used. Therefore, a liquid refrigerant, which is rich in a high boiling point refrigerant, is accumulated in the bottom portion of the accumulator 27. For example, in the case where the zeotropic refrigerant mixture is a mixture of R32 (having a boiling point of -52°C) and HFO-1234yf (having a boiling point of -29°C), a liquid refrigerant, which is rich in HFO-1234yf, is accumulated in the bottom portion of the accumulator 27.

The heating radiator 3 is a device for radiating heat from hot water flowing therethrough, and has an inlet for allowing the hot water to flow thereinto, and an outlet for allowing the hot water that has radiated its heat to flow therefrom. As the heating radiator 3, for example, a radiator to be placed in a room of a building may be used. A hot water panel to be laid on a floor also may be used.

The outlet of the heating radiator 3 is connected to the radiator 22 by the supply pipe 31 for supplying water to the radiator 22. The inlet of the heating radiator 3 is connected to the radiator 22 by the recovery pipe 32 for recovering hot water produced in the radiator 22. The supply pipe 31 is provided with an incoming water temperature sensor 72 for detecting the temperature of water (hereinafter referred also as an "incoming water temperature") to be supplied to the radiator 22. The supply pipe 31 also is provided with a pump 61 on the upstream side of the incoming water temperature sensor 72. The incoming water temperature sensor 72 is connected to the heat pump controller 26. On the other hand, the recovery pipe 32 is provided with a hot water temperature sensor 71 for detecting the temperature of the hot water produced in the radiator 22. When the pump 61 is rotated, the water is guided from the heating radiator 3 to the radiator 22 by the supply pipe 31, and the hot water produced in the radiator 22 is guided from the radiator 22 to the heating radiator 3 by the recovery pipe 32.

The overall controller 5 includes a microcomputer, a digital signal processor (DSP), or the like, and is connected to the above-mentioned heat pump controller 26, the hot water temperature sensor 71, and the pump 61, respectively.

Next, the control operations performed by the overall controller 5 and the heat pump controller 26 are described specifically.

When a user turns on a heating switch (not shown), the overall controller 5 rotates the pump 61 and sends an operation start signal to the heat pump controller 26. Thereby, water is heated in the radiator 22 to produce hot water, and the produced hot water is fed to the heating radiator 3. Thus, air-heating is performed. The overall controller 5 controls the rotational rate of the pump 61 to regulate the flow rate of the water flowing through the supply pipe 31 so that the temperature of the water detected by the hot water temperature sensor 71 becomes a specified temperature (for example, 70°C).

When the temperature of the water (incoming water temperature) supplied to the radiator 22 is relatively high, the heat pump controller 26 performs a control operation to reduce the amount of the liquid refrigerant in the accumulator 27. Specifically, when the temperature detected by the incoming water temperature sensor 72 is higher than a predetermined temperature (for example, 55°C), the heat pump controller 26 reduces the opening of the expansion valve 23. When the opening of the expansion valve 23 is reduced, the refrigerant absorbs heat efficiently in the evaporator 24 and the dryness of the refrigerant flowing into the accumulator 27 increases. Thereby, the amount of the liquid refrigerant remaining in the accumulator 27 decreases. As a result, the composition ratio of the high boiling point refrigerant in the refrigerant circulating through the heat pump circuit 20 increases, which thereby suppresses the increase in the high pressure of the refrigeration cycle.

With reference to FIG. 3, the above-described phenomenon is explained below by taking, as an example, the case where the zeotropic refrigerant mixture is a mixture of R32 and HFO-1234yf. In FIG. 3, full lines indicate the case where the refrigerant is R32 alone and the case where the refrigerant is HFO-1234yf alone, a single-dashed line indicates the case where the composition ratio of HFO-1234yf in the mixed refrigerant circulating through the heat pump circuit 20 has a certain value, and a double-dashed line indicates the case where the composition ratio of HFO-1234yf is higher than the certain value.

First, it is assumed that the high pressure of the refrigeration cycle is located at Point a on the single-dashed line when the incoming water temperature is low. If the amount of the liquid refrigerant in the accumulator 27 is fixed, the composition of the refrigerant circulating through the heat pump circuit 20 does not change. Therefore, when the incoming water temperature rises to, for example, 65°C, the high pressure of the refrigeration cycle shifts from Point a to Point b along the single-dashed line. In the present embodiment, however, the amount of the liquid refrigerant remaining in the accumulator 27 decreases. As a result, the composition ratio of the high boiling point refrigerant in the refrigerant circulating through the heat pump circuit 20 increases, and thus the high pressure of the refrigeration cycle shifts from Point a to Point c on the double-dashed line. Accordingly, the increase in the high pressure of the refrigeration cycle can be suppressed when the incoming water temperature rises.

That is, when the opening of the expansion valve 23 is reduced, Point A shifts to the right in the Mollier diagram of FIG. 2 and thus the dryness increases. Thereby, the amount of the liquid refrigerant remaining in the accumulator 27 decreases. As a result, the composition ratio of the high boiling point refrigerant in the refrigerant circulating through the heat pump circuit 20 increases, which thereby suppresses the increase in the high pressure of the refrigeration cycle.

It should be noted that the liquid refrigerant in the accumulator 27 does not necessarily have to disappear completely. When the amount of the liquid refrigerant in the accumulator 27 decreases to some extent, the heat pump controller 26 may stop reducing the opening of the expansion valve 23 to maintain it.

### (Second Embodiment)

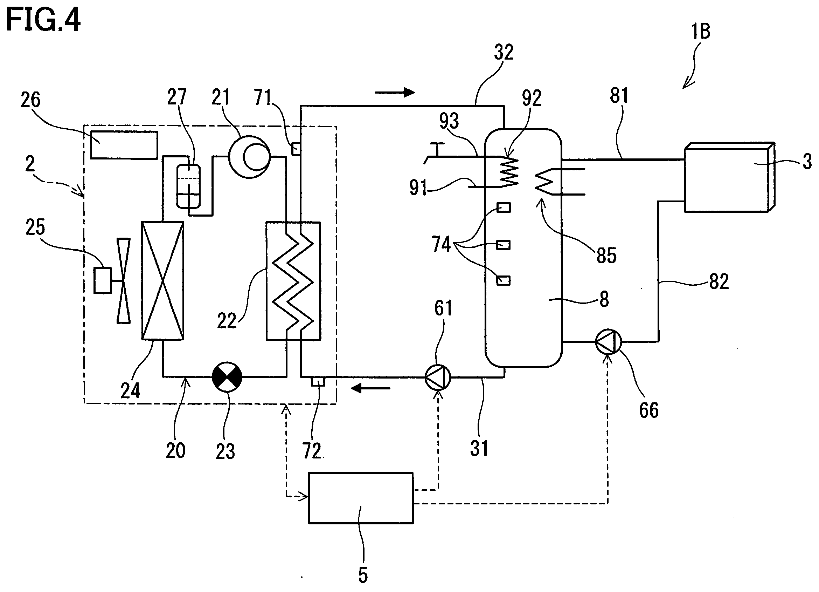

FIG. 4 shows a liquid circulation heating system 1B according to a second embodiment of the present invention. In the present embodiment, the same components as those in the first embodiment are designated by the same reference numerals and no further description is given.

The liquid circulation heating system 1B of the second embodiment has basically the same configuration as the liquid circulation heating system 1A of the first embodiment, except that the heating radiator 3 and the radiator 22 are connected via the hot water storage tank 8.

Furthermore, as a refrigerant charged in the heat pump circuit 20, the same refrigerant as that described in the first embodiment also is used in the present embodiment, and therefore the description of the zeotropic refrigerant mixture is not repeated here. The same description also is not repeated in the following embodiment and modifications.

The hot water storage tank 8 is a vertically cylindrical closed casing and is filled with water. The lower portion of the hot water storage tank 8 is connected to the radiator 22 by the supply pipe 31, and the upper portion thereof is connected to the radiator 22 by the recovery pipe 32.

When the pump 61 is rotated, the water is guided from the lower portion of the hot water storage tank 8 to the radiator 22 by the supply pipe 31, and the hot water produced in the radiator 22 is guided from the radiator 22 to the upper portion of the hot water storage tank 8 by the recovery pipe 32. Thereby, the produced hot water is stored in the hot water storage tank 8 from the top thereof. On the peripheral surface of the hot water storage tank 8, hot water temperature sensors 74 for determining how much hot water remains in the tank 8 are provided separately from each other in the vertical direction. The hot water temperature sensors 74 are connected to the overall controller 5.

In the present embodiment, a heat exchanger 92 for hot water supply is provided at an upper position in the hot water storage tank 8, and a water inlet pipe 91 and a hot water outlet pipe 93 are connected to this heat exchanger 92. That is, in the present embodiment, the produced hot water can be used as a heat source for hot water supply. In addition, a heater 85 for re-heating the hot water also is provided at an upper position in the hot water storage tank 8.

The inlet of the heating radiator 3 is connected to the upper portion of the hot water storage tank 8 by a feed pipe 81, and the outlet of the heating radiator 3 is connected to the lower portion of the hot water storage tank 8 by a return pipe 82. In the present embodiment, a circulation pump 66 is provided in the return pipe 82, but the circulation pump 66 may be provided in the feed pipe 81. The circulation pump 66 is connected to the overall controller 5. When the circulation pump 66 is rotated, the hot water stored in the hot water storage tank 8 is fed to the heating radiator 3 through the feed pipe 81, and the hot water is returned to the hot water storage tank 8 through the return pipe 82 after radiating heat in the heating radiator 3.

Next, the control operations performed by the overall controller 5 and the heat pump controller 26 are described specifically.

### (Hot water storage operation)

When the overall controller 5 determines that the amount of hot water remaining in the tank is less than the required amount based on the temperature detected by the hot water temperature sensors 74, for example, during nighttime hours (for example, from 23:00 to 7:00), it rotates the pump 61, and sends an operation start signal to the heat pump controller 26. Thereby, water is heated in the radiator 22 to produce hot water, and the produced hot water is stored in the hot water storage tank 8. The overall controller 5 also controls the rotational rate of the pump 61 to regulate the flow rate of the water flowing through the supply pipe 31 so that the temperature of the water detected by the hot water temperature sensor 71 becomes a specified temperature (for example, 70°C).

When the temperature of the water (incoming water temperature) supplied to the radiator 22 is relatively high, the heat pump controller 26 performs a control operation to reduce the amount of the liquid refrigerant in the accumulator 27. Specifically, when the temperature detected by the incoming water temperature sensor 72 is higher than a predetermined temperature (for example, 55°C), the heat pump controller 26 reduces the opening of the expansion valve 23. When the opening of the expansion valve 23 is reduced, the refrigerant absorbs heat efficiently in the evaporator 24 and the dryness of the refrigerant flowing into the accumulator 27 increases. Thereby, the amount of the liquid refrigerant remaining in the accumulator 27 decreases. As a result, the composition ratio of the high boiling point refrigerant in the refrigerant circulating through the heat pump circuit 20 increases, which thereby suppresses the increase in the high pressure of the refrigeration cycle.

That is, when the opening of the expansion valve 23 is reduced, Point A shifts to the right in the Mollier diagram of FIG. 2 and thus the dryness increases. Thereby, the amount of the liquid refrigerant remaining in the accumulator 27 decreases. As a result, the composition ratio of the high boiling point refrigerant in the refrigerant circulating through the heat pump circuit 20 increases, which thereby suppresses the increase in the high pressure of the refrigeration cycle.

It should be noted that the liquid refrigerant in the accumulator 27 does not necessarily have to disappear completely. When the amount of the liquid refrigerant in the accumulator 27 decreases to some extent, the heat pump controller 26 may stop reducing the opening of the expansion valve 23 to maintain it.

### (Air-heating operation)

When a user turns on a heating switch (not shown), the overall controller 5 rotates the circulation pump 66. Thereby, the hot water stored in the hot water storage tank 8 is fed to the heating radiator 3, where heat is radiated from the hot water. Thus, air-heating is performed.

In the liquid circulation heating system 1B of the second embodiment described above, high-temperature hot water stored in the hot water storage tank 8 can be fed to the heating radiator 3 even during the early stage of the air-heating operation. Therefore, air-heating can be started immediately after the heating switch is turned on.

### (Third Embodiment)

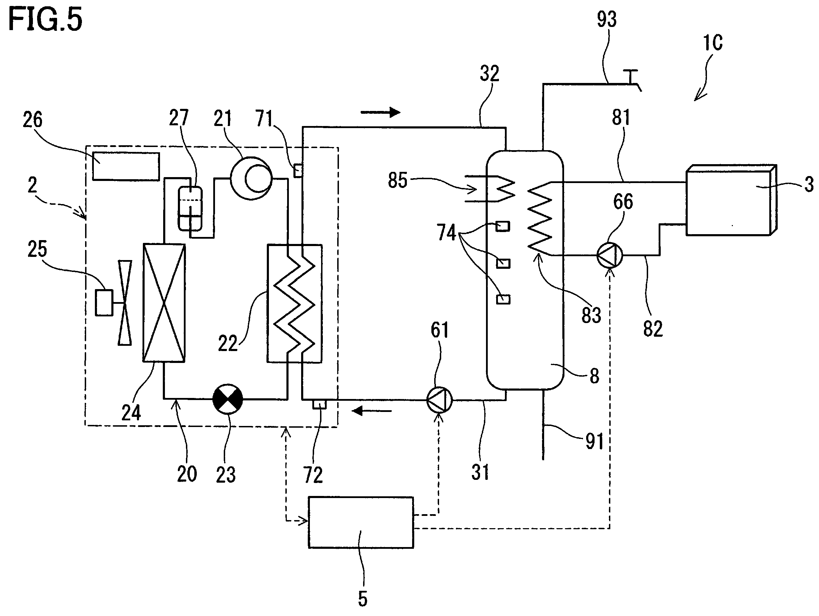

FIG. 5 shows a liquid circulation heating system 1C according to a third embodiment of the present invention. In the present embodiment, the same components as those in the first and second embodiments are designated by the same reference numerals and no further description is given.

In the liquid circulation heating system 1C of the third embodiment, hot water stored in the hot water storage tank 8 can be used directly for hot water supply. Specifically, the water inlet pipe 91 is connected to the lower portion of the hot water storage tank 8, and the hot water outlet pipe 93 is connected to the upper portion of the hot water storage tank 8. At an upper position in the hot water storage tank 8, a heat exchanger 83 for exchanging heat between the hot water stored in the hot water storage tank 8 and a heat transfer liquid (secondary liquid) is provided. The heat exchanger 83 is connected to the heating radiator 3 by the feed pipe 81 and the return pipe 82. When the circulation pump 66 is rotated, the heat transfer liquid heated in the heat exchanger 83 is fed to the heating radiator 3 through the feed pipe 81, and the heat transfer liquid is returned to the heat exchanger 83 through the return pipe 82 after radiating heat in the heating radiator 3. As the heat transfer liquid, for example, an antifreeze liquid can be used, but water preferably is used because it is available at low cost and in large quantities.

Since the overall controller 5 performs control in the same manner as in the second embodiment, the description thereof is not repeated here. It should be noted, however, that during the air-heating operation, the heat transfer liquid that has exchanged heat with the hot water stored in the hot water storage tank 8 radiates heat in the heating radiator 3, that is, the heat of the hot water is transferred to the heating radiator 3 by the heat transfer liquid, and thereby air-heating is performed.

In the liquid circulation heating system 1C having such a configuration, the temperature in the lower portion of the hot water storage tank 8 can be kept low because of the water supplied from the water inlet pipe 91. Therefore, the low-temperature water can be supplied to the radiator 22, and thus the efficiency of the heat pump 2 can be enhanced.

### (First Modification)

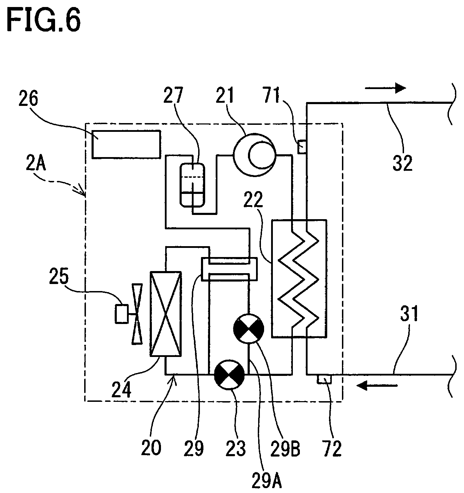

In each of the above embodiments, a heat pump 2A as shown in FIG. 6 also can be employed. In this heat pump 2A, when the temperature of the water (incoming water temperature) supplied to the radiator 22 is relatively high, the refrigerant to be fed to the accumulator 27 from the evaporator 24 is heated.

Specifically, the heat pump circuit 20 includes a heat exchanger (heater) 29 between the evaporator 24 and the accumulator 27, and a bypass passage 29A that bypasses the expansion valve 23 so as to pass through the heat exchanger 29. With this configuration, the heat exchanger 29 exchanges heat between the refrigerant flowing through the bypass passage 29A and the refrigerant to be fed to the accumulator 27 from the evaporator 24. The bypass passage 29 is provided with an open/close valve 29B on the upstream side of the heat exchanger 29. The open/close valve 29B is connected to the heat pump controller 26, and usually is closed by the heat pump controller 26.

When the temperature detected by the incoming water temperature sensor 72 is higher than a predetermined temperature, the heat pump controller 26 opens the open/close valve 29B. When the open/close valve 29B is opened, the refrigerant that has been evaporated in the evaporator 24 is heated further in the heat exchanger 29, and the dryness of the refrigerant flowing into the accumulator 27 increases. Thereby, the amount of the liquid refrigerant remaining in the accumulator 27 decreases. As a result, the composition ratio of the high boiling point refrigerant in the refrigerant circulating through the heat pump circuit 20 increases, which thereby suppresses the increase in the high pressure of the refrigeration cycle.

That is, when the open/close valve 29B is opened, Point A shifts to the right in the Mollier diagram of FIG. 2 and thus the dryness increases. Thereby, the amount of the liquid refrigerant remaining in the accumulator 27 decreases. As a result, the composition ratio of the high boiling point refrigerant in the refrigerant circulating through the heat pump circuit 20 increases, which thereby suppresses the increase in the high pressure of the refrigeration cycle.

It should be noted that the liquid refrigerant in the accumulator 27 does not necessarily have to disappear completely. When the amount of the liquid refrigerant in the accumulator 27 decreases to some extent, the heat pump controller 26 may stop increasing the opening of the open/close valve 29B to maintain it.

When the incoming water temperature is relatively high, it is only desirable that the amount of the heating applied to the refrigerant to be fed to the accumulator 27 from the evaporator 24 by the heat exchanger 29 increase. The open/close valve 29B does not necessarily have to be closed completely in its initial state.

In the first modification, the heat exchanger 29 is used as the heater of the present invention, but the heater of the present invention is not limited to the heat exchanger. For example, it may be an electric heater, or the like. If the heat exchanger 29 and the bypass passage 29A are provided as in the case of the first modification, however, the refrigerant to be fed to the accumulator 27 from the evaporator 24 can be heated by utilizing the heat of the refrigerant that has passed through the radiator 22.

### (Second Modification)

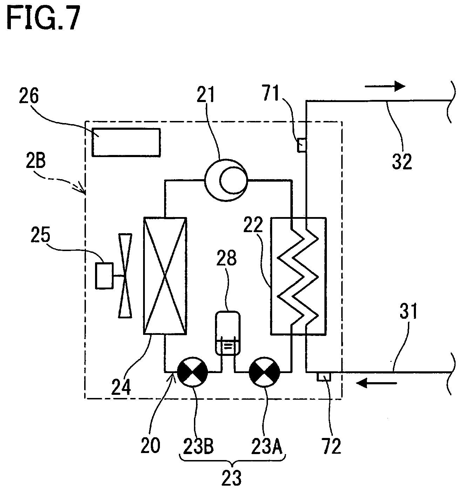

In each of the above embodiments, a heat pump 2B as shown in FIG. 7 also can be employed. In this heat pump 2B, a first expansion valve 23A and a second expansion valve 23B are used as the decompressor of the present invention. The refrigerant is decompressed by the first expansion valve 23A after radiating heat in the radiator 22, and further decompressed by the second expansion valve 23B after being decompressed by the first expansion valve 23A. A receiver 28 is provided between the first expansion valve 23A and the second expansion valve 23B. This receiver 28 separates the refrigerant decompressed by the first expansion valve 23A into a gas refrigerant and a liquid refrigerant, and serves as the vapor-liquid separator of the present invention.

When the temperature detected by the incoming water temperature sensor 72 is higher than a predetermined temperature, the heat pump controller 26 reduces the opening of the first expansion valve 23A and increases the opening of the second expansion valve 23B. When the opening of the first expansion valve 23A is reduced and the opening of the second expansion valve 23B is increased, the refrigerant absorbs heat efficiently in the evaporator 24 and the dryness of the refrigerant flowing into the receiver 28 increases. Thereby, the amount of the liquid refrigerant remaining in the receiver 28 decreases. As a result, the composition ratio of the high boiling point refrigerant in the refrigerant circulating through the heat pump circuit 20 increases, which thereby suppresses the increase in the high pressure of the refrigeration cycle.

It should be noted that the liquid refrigerant in the receiver 28 does not necessarily have to disappear completely. When the amount of the liquid refrigerant in the receiver 28 decreases to some extent, the heat pump controller 26 may stop controlling the openings of the first expansion valve 23A and the second expansion valve 23B to maintain them.

### (Other Modifications)

In each of the above embodiments and modifications, the heat pump controller 26 serves as the controller of the present invention. In the case where the incoming water temperature sensor 72 is connected to the overall controller 5, the heat pump controller 26 and the overall controller 5 may serve as the controller of the present invention.

As the decompressor of the present invention, an expander for recovering power from the expanding refrigerant also can be used.

Furthermore, it is also possible, by using fraction separation, membrane separation, or the like, to increase the composition ratio of the high boiling point refrigerant in the refrigerant circulating through the heat pump circuit 20 when the water supplied to the radiator 22 has a relatively high temperature.

## Claims

1. A liquid circulation heating system (1A, 1B, 1C) for performing air-heating by heating a liquid to produce a heated liquid and releasing heat of the heated liquid from a heating radiator (3), the system comprising a heat pump circuit (20) for circulating a refrigerant,
wherein the heat pump circuit (20) includes:
a refrigerant radiator (22) for heating the liquid by radiating heat from the refrigerant to produce the heated liquid,
a compressor (21) for compressing the refrigerant;
a decompressor (23) for decompressing the refrigerant; wherein the decompressor (23) comprises a first expansion valve (23, 23A),
an evaporator (24) for evaporating the refrigerant; and
a vapor-liquid separator (27) for separating the refrigerant into a gas refrigerant and a liquid refrigerant, and **characterized in that**
the heat pump circuit (20) is charged with a zeotropic refrigerant mixture of at least two refrigerants having different boiling points, as the refrigerant, and **in that**
the liquid circulation heating system further comprises a controller (5, 26) which reduces an opening of the first expansion valve (23) when the temperature of the liquid supplied to the refrigerant radiator (22) as detected by an incoming liquid temperature sensor (72) is higher than a predetermined temperature for performing a control operation to reduce an amount of the liquid refrigerant in the vapor-liquid separator (27) so that a composition ratio of a higher boiling point refrigerant in the refrigerant circulating through the heat pump circuit (20) increases when the liquid supplied to the refrigerant radiator (22) has a relatively high temperature.

2. The liquid circulation heating system (1A, 1B, 1C) according to claim 1, wherein the vapor-liquid separator (27) is an accumulator provided between the evaporator (24) and the compressor (21).

3. The liquid circulation heating system (1A, 1B, 1C) according to claim 2, wherein the heat pump circuit (20) further includes, between the evaporator (24) and the accumulator (27), a heater (29) for heating the refrigerant to be fed to the accumulator (27) from the evaporator(24), and the controller (5, 26) increases an amount of the heating applied to the refrigerant by the heater (29) when the liquid supplied to the refrigerant radiator (22) has a relatively high temperature.

4. The liquid circulation heating system (1A, 1B, 1C) according to claim 3, wherein the heat pump circuit (20) further includes a bypass passage (29A) that bypasses the decompressor (23), and
the heater (29) is a heat exchanger for exchanging heat between the refrigerant flowing through the bypass passage (29A) and the refrigerant to be fed to the accumulator (27) from the evaporator (24).

5. The liquid circulation heating system (1A, 1B, 1C) according to claim 1, wherein the decompressor (23) comprises a second expansion valve (23B) for further decompressing the refrigerant after the refrigerant is decompressed by the first expansion valve (23A), and wherein
the vapor-liquid separator (27) is a receiver (28) provided between the first expansion valve (23A) and the second expansion valve (23B), and
the controller (5, 26) reduces an opening of the first expansion valve (23A) and increases an opening of the second expansion valve (23B) when the liquid supplied to the refrigerant radiator has a relatively high temperature.

6. The liquid circulation heating system (1A, 1B, 1C) according to any of claims 1-5, further comprising:
a supply pipe (31) for guiding the liquid from the heating radiator (3) to the refrigerant radiator (22); and
a recovery pipe (32) for guiding the heated liquid from the refrigerant radiator (22) to the heating radiator (3).

7. The liquid circulation heating system (1A, 1B, 1C) according to any of claims 1-6, further comprising:
a tank (8) for storing the produced heated liquid;
a supply pipe for guiding the liquid from a lower portion of the tank to the refrigerant radiator;
a recovery pipe (31) for guiding the heated liquid from the refrigerant radiator (22) to an upper portion of the tank;
a feed pipe (81) for feeding the heated liquid stored in the tank (8) to the heating radiator (3); and
a return pipe (82) for returning the heated liquid to the tank (8) after the heated liquid radiates heat in the heating radiator (3).

8. The liquid circulation heating system (1A, 1 B, 1 C) according to any of claim 1-6, further comprising:
a tank (8) for storing the produced heated liquid;
a supply pipe (31) for guiding the liquid from a lower portion of the tank to the refrigerant radiator (22);
a recovery pipe (32) for guiding the heated liquid from the refrigerant radiator (22) to an upper portion of the tank (8);
a heat exchanger (83), disposed in the tank (8), for exchanging heat between the heated liquid stored in the tank (8) and a heat transfer liquid;
a feed pipe (81) for feeding the heat transfer liquid to the heating radiator (3) after the heat transfer liquid is heated in the heat exchanger (83); and
a return pipe (82) for returning the heat transfer liquid to the heat exchanger (83) after the heat transfer liquid radiates heat in the heating radiator (3).

9. The liquid circulation heating system (1A, 1B, 1C) according to any of claims 1-8, wherein the liquid is water, and the heated liquid is hot water.

10. A method of controlling a liquid circulation heating system (1A, 1 B, 1 C) for performing air-heating by heating a liquid to produce a heated liquid and releasing heat of the heated liquid from a heating radiator (3), wherein the liquid circulation heating system (1A, 1B, 1C) includes a heat pump circuit (20) for circulating a refrigerant, and the heat pump circuit includes:
a refrigerant radiator (22) for heating the liquid by radiating heat from the refrigerant to produce the heated liquid; a compressor (21) for compressing the refrigerant; a decompressor (23) for decompressing the refrigerant; an evaporator (24) for evaporating the refrigerant; and a
vapor-liquid separator (27) for separating the refrigerant into a gas refrigerant and a liquid refrigerant, wherein the decompressor (23) comprises a first expansion valve (23, 23A),
the heat pump circuit (20) is charged with a zeotropic refrigerant mixture of at least two refrigerants having different boiling points, as the refrigerant, and
the method comprises the step of reducing an opening of the first expansion valve (23) when the termperature of the liquid supplied to the refrigerant radiator (22) as detected by an incoming liquid temperature sensor (72) is higher than a predetermined temperature to reduce an amount of the liquid refrigerant in the vapor-liquid separator (27) so that a composition ratio of a higher boiling point refrigerant in the refrigerant circulating through the heat pump circuit (20) increases when the liquid supplied to the refrigerant radiator (22) has a relatively high temperature.

## Patentansprüche

1. Flüssigkeitsumlauf-Heizsystem (1 A, 1 B, 1 C) zum Herbeiführen einer Lufterwärmung durch das Erwärmen einer Flüssigkeit, um eine erwärmte Flüssigkeit zu erzeugen, und durch das Abgeben von Wärme von der erwärmten Flüssigkeit aus einem Heizkörper (3), wobei das System einen Wärmepumpenkreislauf (20) zum Zirkulieren eines Kühlmittels umfasst,
wobei der Wärmepumpenkreislauf (20) Folgendes einschließt:
einen Kühlmittelkühler (22) zum Erwärmen der Flüssigkeit durch das Abstrahlen von Wärme von dem Kühlmittel, um die erwärmte Flüssigkeit zu erzeugen,
einen Kompressor (21) zum Komprimieren des Kühlmittels;
einen Dekompressor (23) zum Dekomprimieren des Kühlmittels; wobei der Dekompressor (23) ein erstes Expansionsventil (23, 23 A) umfasst,
einen Verdampfer (24) zum Verdampfen des Kühlmittels; und
einen Dampf-Flüssigkeits-Separator (27) zum Separieren des Kühlmittels in ein gasförmiges Kühlmittel und ein flüssiges Kühlmittel, und **dadurch gekennzeichnet, dass**
der Wärmepumpenkreislauf (20) angereichert ist mit einer zeotropen Kühlmittelmischung aus mindestens zwei Kühlmitteln mit unterschiedlichen Siedepunkten als das Kühlmittel, und dass
das Flüssigkeitsumlauf-Heizsystem ferner eine Steuerung (5, 26) umfasst, welche eine Öffnung des ersten Expansionsventils (23) verkleinert, wenn die Temperatur der Flüssigkeit, die zu dem Kühlmittelkühler (22) zugeführt wird, wie von einem Temperatursensor für eintretende Flüssigkeiten (72) festgestellt wird, höher ist als eine vorbestimmte Temperatur zum Ausführen einer Steuerungsoperation, um eine Menge des flüssigen Kühlmittels in dem Dampf-Flüssigkeits-Separator (27) zu reduzieren, so dass ein Zusammensetzungsverhältnis eines Kühlmittels mit einem höheren Siedepunkt in dem Kühlmittel, welches durch den Wärmepumpenkreislauf (20) zirkuliert, zunimmt, wenn die Flüssigkeit, die dem Kühlmittelkühler (22) zugeführt wird, eine relativ hohe Temperatur aufweist.

2. Flüssigkeitsumlauf-Heizsystem (1 A, 1 B, 1 C) nach Anspruch 1, wobei der Dampf-Flüssigkeits-Separator (27) ein Speicher ist, welcher zwischen dem Verdampfer (24) und dem Kompressor (21) vorgesehen ist.

3. Flüssigkeitsumlauf-Heizsystem (1 A, 1 B, 1 C) nach Anspruch 2, wobei der Wärmepumpenkreislauf (20) ferner zwischen dem Verdampfer (24) und dem Speicher (27) eine Heizung (29) umfasst, zum Erwärmen des Kühlmittels, welches dem Speicher (27) aus dem Verdampfer (24) zuzuführen ist, und die Steuerung (5, 26) ein Maß der Erwärmung, welche durch die Heizung (29) auf das Kühlmittel angewandt wird, erhöht, wenn die Flüssigkeit, die dem Kühlmittelkühler (22) zugeführt wird, eine relativ hohe Temperatur aufweist.

4. Flüssigkeitsumlauf-Heizsystem (1 A, 1 B, 1 C) nach Anspruch 3, wobei der Wärmepumpenkreislauf (20) ferner einen Bypasskanal (29 A) umfasst, welcher den Dekompressor (23) umgeht, und
die Heizung (29) einen Wärmetauscher darstellt, zum Tauschen von Wärme zwischen dem Kühlmittel, welches durch den Bypasskanal (29 A) fließt, und dem Kühlmittel, welches aus dem Verdampfer (24) dem Speicher (27) zuzuführen ist.

5. Flüssigkeitsumlauf-Heizsystem (1 A, 1 B, 1 C) nach Anspruch 1, wobei der Dekompressor (23) ein zweites Expansionsventil (23 B) umfasst, zum weiteren Dekomprimieren des Kühlmittels, nachdem das Kühlmittel durch das erste Expansionsventil (23 A) dekomprimiert wurde, und wobei
der Dampf-Flüssigkeits-Separator (27) einen Empfänger (28) darstellt, welcher zwischen dem ersten Expansionsventil (23 A) und dem zweiten Expansionsventil (23 B) vorgesehen ist, und
die Steuerung (5, 26) eine Öffnung des ersten Expansionsventils (23 A) verkleinert und eine Öffnung des zweiten Expansionsventils (23 B) vergrößert, wenn die Flüssigkeit, die dem Kühlmittelkühler zugeführt wird, eine relativ hohe Temperatur aufweist.

6. Flüssigkeitsumlauf-Heizsystem (1 A, 1 B, 1 C) nach einem der Ansprüche 1 bis 5, ferner Folgendes umfassend:
eine Zufuhrleitung (31) zum Leiten der Flüssigkeit aus dem Heizkörper (3) zu dem Kühlmittelkühler (22); und
eine Rückgewinnungsleitung (32) zum Leiten der erwärmten Flüssigkeit aus dem Kühlmittelkühler (22) zu dem Heizkörper (3).

7. Flüssigkeitsumlauf-Heizsystem (1 A, 1 B, 1 C) nach einem der Ansprüche 1 bis 6, ferner Folgendes umfassend:
einen Tank (8) zum Speichern der erzeugten erwärmten Flüssigkeit;
eine Zufuhrleitung zum Leiten der Flüssigkeit von einem unteren Abschnitt des Tanks zu dem Kühlmittelkühler;
eine Rückgewinnungsleitung (31) zum Leiten der erwärmten Flüssigkeit von dem Kühlmittelkühler (22) zu einem oberen Abschnitt des Tanks;
ein Zuleitung (81) zum Zuführen von der in dem Tank (8) gespeicherten erwärmten Flüssigkeit zu dem Heizkörper (3); und
eine Rücklaufleitung (82) zum Rückführen der erwärmten Flüssigkeit zu dem Tank (8), nachdem die erwärmte Flüssigkeit Wärme in dem Heizkörper (3) abgestrahlt hat.

8. Flüssigkeitsumlauf-Heizsystem (1 A, 1 B, 1 C) nach einem der Ansprüche 1 bis 6, ferner Folgendes umfassend:
einen Tank (8) zum Speichern der erzeugten erwärmten Flüssigkeit;
eine Zufuhrleitung (31) zum Leiten der Flüssigkeit von einem unteren Abschnitt des Tanks zu dem Kühlmittelkühler (22);
eine Rückgewinnungsleitung (32) zum Leiten der erwärmten Flüssigkeit von dem Kühlmittelkühler (22) zu einem oberen Abschnitt des Tanks (8);
einen Wärmetauscher (83), welcher in dem Tank (8) angeordnet ist, zum Tauschen von Wärme zwischen der erwärmten Flüssigkeit, die in dem Tank (8) gespeichert ist, und einer Wärmeübertragungsflüssigkeit;
eine Zuleitung (81) zum Zuführen der Wärmeübertragungsflüssigkeit zu dem Heizkörper (3), nachdem die Wärmeübertragungsflüssigkeit in dem Wärmetauscher (83) erhitzt wurde; und
eine Rücklaufleitung (82) zum Rückführen der Wärmeübertragungsflüssigkeit zu dem Wärmetauscher (83), nachdem die Wärmeübertragungsflüssigkeit Wärme in dem Heizkörper (3) abgestrahlt hat.

9. Flüssigkeitsumlauf-Heizsystem (1 A, 1 B, 1 C) nach einem der Ansprüche 1 bis 8, wobei die Flüssigkeit Wasser ist, und die erwärmte Flüssigkeit warmes Wasser ist.

10. Verfahren zur Steuerung eines Flüssigkeitsumlauf-Heizsystems (1 A, 1 B, 1 C) zum Durchführen einer Lufterwärmung durch das Erwärmen einer Flüssigkeit, um eine erwärmte Flüssigkeit zu erzeugen, und das Abgeben von Wärme von der erwärmten Flüssigkeit aus einem Heizkörper (3), wobei das Flüssigkeitsumlauf-Heizsystem (1 A, 1 B, 1 C) einen Wärmepumpenkreislauf (20) umfasst, zum Zirkulieren eines Kühlmittels, und der Wärmepumpenkreislauf Folgendes umfasst:
einen Kühlmittelkühler (22) zum Erwärmen der Flüssigkeit durch das Abstrahlen von Wärme von dem Kühlmittel, um die erwärmte Flüssigkeit zu erzeugen; einen Kompressor (21) zum Komprimieren des Kühlmittels; einen Dekompressor (23) zum Dekomprimieren des Kühlmittels; einen Verdampfer (24) zum Verdampfen des Kühlmittels; und
einen Dampf-Flüssigkeits-Separator (27) zum Separieren des Kühlmittels in ein gasförmiges Kühlmittel und ein flüssiges Kühlmittel, wobei der Dekompressor (23) ein erstes Expansionsventil (23, 23 A) umfasst,
der Wärmepumpenkreislauf (20) angereichert ist mit einer zeotropen Kühlmittelmischung aus mindestens zwei Kühlmitteln mit unterschiedlichen Siedepunkten als das Kühlmittel, und
das Verfahren den Schritt der Verkleinerung einer Öffnung des ersten Expansionsventils (23) umfasst, wenn die Temperatur der Flüssigkeit, die dem Kühlmittelkühler (22) zugeführt wird, wie von einem Temperatursensor für eintretende Flüssigkeiten (72) festgestellt wird, höher ist als eine vorbestimmte Temperatur, um eine Menge des flüssigen Kühlmittels in dem Dampf-Flüssigkeits-Separator (27) zu reduzieren, so dass ein Zusammensetzungsverhältnis eines Kühlmittels mit einem höheren Siedepunkt in dem Kühlmittel, welches durch den Wärmepumpenkreislauf (20) zirkuliert, zunimmt, wenn die Flüssigkeit, die dem Kühlmittelkühler (22) zugeführt wird, eine relativ hohe Temperatur aufweist.

## Revendications

1. Système de chauffage à circulation de liquide (1A, 1B, 1C) destiné à effectuer un chauffage d'air en chauffant un liquide pour produire un liquide chauffé et en dégageant, depuis un radiateur (3), de la chaleur du liquide chauffé, ledit système comprenant un circuit de pompe à chaleur (20) pour faire circuler un réfrigérant,
dans lequel le circuit de pompe à chaleur (20) comprend:
un radiateur de réfrigérant (22) destiné à chauffer le liquide en rayonnant de la chaleur du réfrigérant afin de produire le liquide chauffé,
un compresseur (21) destiné à comprimer le réfrigérant;
un décompresseur (23) destiné à décomprimer le réfrigérant, ledit décompresseur (23) comprenant une première valve d'expansion (23, 23A);
un évaporateur (24) destiné à évaporer le réfrigérant; et
un séparateur vapeur-liquide (27) destiné à séparer le réfrigérant en un réfrigérant gazeux et en un réfrigérant liquide, et **caractérisé par le fait que**
le circuit de pompe à chaleur (20) est chargé d'un mélange zéotrope de réfrigérants se composant d'au moins deux réfrigérants ayant des points d'ébullition différents, en tant que réfrigérant, et que
le système de chauffage à circulation de liquide comprend en outre une commande (5, 26) qui réduit une ouverture de la première valve d'expansion (23) lorsque la température du liquide amené au radiateur de réfrigérant (22), comme détecté par un capteur de température de liquide entrant (72), est supérieure à une température prédéterminée pour mettre en oeuvre une opération de commande afin de réduire une quantité du réfrigérant liquide dans ledit séparateur vapeur-liquide (27) de sorte qu'un rapport de composition d'un réfrigérant ayant un point d'ébullition plus élevé, dans le réfrigérant circulant à travers le circuit de pompe à chaleur (20), augmente lorsque le liquide amené au radiateur de réfrigérant (22) présente une température relativement élevée.

2. Système de chauffage à circulation de liquide (1A, 1B, 1C) selon la revendication 1, dans lequel ledit séparateur vapeur-liquide (27) est un accumulateur prévu entre l'évaporateur (24) et le compresseur (21).

3. Système de chauffage à circulation de liquide (1A, 1B, 1C) selon la revendication 2, dans lequel le circuit de pompe à chaleur (20) comprend en outre, entre ledit évaporateur (24) et ledit accumulateur (27), un dispositif de chauffage (29) pour chauffer le réfrigérant à amener depuis l'évaporateur (24) à l'accumulateur (27), et la commande (5, 26) augmente un degré du chauffage appliqué au réfrigérant par le dispositif de chauffage (29), lorsque le liquide amené au radiateur de réfrigérant (22) présente une température relativement élevée.

4. Système de chauffage à circulation de liquide (1A, 1B, 1C) selon la revendication 3, dans lequel le circuit de pompe à chaleur (20) comprend en outre un canal de dérivation (29A) qui contourne le décompresseur (23), et
le dispositif de chauffage (29) est un échangeur de chaleur pour échanger de la chaleur entre le réfrigérant circulant à travers le canal de dérivation (29A) et le réfrigérant à amener depuis l'évaporateur (24) à l'accumulateur (24).

5. Système de chauffage à circulation de liquide (1A, 1B, 1C) selon la revendication 1, dans lequel ledit décompresseur (23) comprend une deuxième valve d'expansion (23B) pour une autre décompression du réfrigérant après que le réfrigérant a été décomprimé par ladite première valve d'expansion (23A), et dans lequel
le séparateur vapeur-liquide (27) est un récepteur (28) prévu entre la première valve d'expansion (23A) et la deuxième valve d'expansion (23B), et
la commande (5, 26) réduit une ouverture de la première valve d'expansion (23A) et agrandit une ouverture de la deuxième valve d'expansion (23B) lorsque le liquide amené au radiateur de réfrigérant présente une température relativement élevée

6. Système de chauffage à circulation de liquide (1A, 1B, 1C) selon l'une quelconque des revendications 1 à 5, comprenant en outre:
une conduite d'alimentation (31) pour guider le liquide depuis le radiateur (3) vers le radiateur de réfrigérant (22); et
une conduite de récupération (32) pour guider le liquide chauffé depuis le radiateur de réfrigérant (22) vers le radiateur (3).

7. Système de chauffage à circulation de liquide (1A, 1B, 1C) selon l'une quelconque des revendications 1 à 6, comprenant en outre:
un réservoir (8) pour stocker le liquide chauffé produit;
une conduite d'alimentation pour guider le liquide depuis une portion inférieure du réservoir vers le radiateur de réfrigérant;
une conduite de récupération (31) pour guider le liquide chauffé depuis le radiateur de réfrigérant (22) vers une portion supérieure du réservoir;
une conduite d'amenée (81) pour amener le liquide chauffé stocké dans le réservoir (8) vers le radiateur (3); et
une conduite de retour (82) pour renvoyer le liquide chauffé dans le réservoir (8) après que le liquide chauffé a rayonné de la chaleur dans le radiateur (3).

8. Système de chauffage à circulation de liquide (1A, 1B, 1C) selon l'une quelconque des revendications 1 à 6, comprenant en outre
un réservoir (8) pour stocker le liquide chauffé produit;
une conduite d'alimentation (31) pour guider le liquide depuis une portion inférieure du réservoir vers le radiateur de réfrigérant (22);
une conduite de récupération (32) pour guider le liquide chauffé depuis le radiateur de réfrigérant (22) vers une portion supérieure du réservoir (8);
un échangeur de chaleur (83) qui est disposé dans ledit réservoir (8) et destiné à échanger de la chaleur entre le liquide chauffé stocké dans le réservoir (8) et un liquide de transfert de chaleur;
une conduite d'amenée (81) pour amener le liquide de transfert de chaleur au radiateur (3) après que le liquide de transfert de chaleur a été chauffé dans l'échangeur de chaleur (83); et
une conduite de retour (82) pour renvoyer le liquide de transfert de chaleur vers l'échangeur de chaleur (83) après que le liquide de transfert de chaleur a rayonné de la chaleur dans le radiateur (3).

9. Système de chauffage à circulation de liquide (1A, 1B, 1C) selon l'une quelconque des revendications 1 à 8, dans lequel le liquide est de l'eau et le liquide chauffé est de l'eau chaude.

10. Procédé de commande d'un système de chauffage à circulation de liquide (1A, 1B, 1C) destiné à effectuer un chauffage d'air en chauffant un liquide pour produire un liquide chauffé et en dégageant, depuis un radiateur (3), de la chaleur du liquide chauffé, ledit système de chauffage à circulation de liquide (1A, 1 B, 1 C) comprenant un circuit de pompe à chaleur (20) pour faire circuler un réfrigérant, et ledit circuit de pompe à chaleur comprenant:
un radiateur de réfrigérant (22) destiné à chauffer le liquide en rayonnant de la chaleur du réfrigérant afin de produire le liquide chauffé; un compresseur (21) destiné à comprimer le réfrigérant; un décompresseur (23) destiné à décomprimer le réfrigérant; un évaporateur (24) destiné à évaporer le réfrigérant; et
un séparateur vapeur-liquide (27) destiné à séparer le réfrigérant en un réfrigérant gazeux et en un réfrigérant liquide, ledit décompresseur (23) comprenant une première valve d'expansion (23, 23A),
le circuit de pompe à chaleur (20) est chargé d'un mélange zéotrope de réfrigérants se composant d'au moins deux réfrigérants ayant des points d'ébullition différents, en tant que réfrigérant, et
le procédé comprend l'étape consistant à réduire une ouverture de la première valve d'expansion (23) lorsque la température du liquide amené au radiateur de réfrigérant (22), comme détecté par un capteur de température de liquide entrant (72), est supérieure à une température prédéterminée pour réduire une quantité du réfrigérant liquide dans ledit séparateur vapeur-liquide (27) de sorte qu'un rapport de composition d'un réfrigérant ayant un point d'ébullition plus élevé, dans le réfrigérant circulant à travers le circuit de pompe à chaleur (20), augmente lorsque le liquide amené au radiateur de réfrigérant (22) présente une température relativement élevée.
